# FASCICULE DE BREVET EUROPEEN

(11) **EP 2 086 783 B1**
(45) Date de publication et mention de la délivrance du brevet: **25.07.2012**
(21) Numéro de dépôt: 07847262.8
(22) Date de dépôt: 21.11.2007
(51) Int. Cl.: B60W 10/00, B60W 10/12, B60W 10/18, B60W 30/18, B60W 40/06, B60T 8/175, B60T 8/1755

(54) **DISPOSITIF DE PILOTAGE POUR L'AMELIORATION DE LA MOTRICITE D'UN VEHICULE**
STEUERUNGSVORRICHTUNG ZUR ERHÖHUNG DER ZUGKRAFT EINES FAHRZEUGS
CONTROL DEVICE FOR IMPROVING THE TRACTION OF A VEHICLE

(30) Priorité: 27.11.2006 FR 0655120
(43) Date de publication de la demande: 12.08.2009
(73) Titulaire: Peugeot Citroën Automobiles Société Anonyme, 78140 Velizy Villacoublay (FR); Robert Bosch GmbH, 70442 Stuttgart (DE)
(72) Inventeur: ABADIE, Vincent, 78500 Sartrouville (FR); BLAISE, Philippe, 25490 Dampierre Les Bois (FR); JOUCGNOUX, Damien, 37130 Mazieres de Touraine (FR)
(74) Mandataire: Ménès, Catherine
(86) Numéro de dépôt international: PCT/EP2007/062663
(87) Numéro de publication internationale: WO 2008/065032

(56) Documents cités:
- EP-A2- 0 475 010
- DE-A1- 19 955 620
- US-A- 5 620 393

## Description

La présente invention concerne les dispositifs pour l'amélioration de la motricité des véhicules en roulage sur des routes ou terrains présentant des caractéristiques différentes et selon différentes situations de vie.

Elle concerne plus particulièrement mais pas exclusivement, un dispositif de pilotage d'un véhicule à deux roues motrices (4x2).

Les situations de vie concernées sont des roulages en marche avant ou marche arrière sur des routes ou terrains présentant :
- des portions boueuses, de l'herbe, des ornières, bourbiers (roulage tout terrain),
- du sable,
- de la neige ou glace,
et ceci pour différents niveaux de pentes.

Dans ces situations de vie, les systèmes utilisés dans le véhicule sont
- soit une transmission 4x4 (quatre roues motrices)
- soit des dispositifs spécifiques sur les véhicules 4x2 (deux roues motrices): anti-patinage standard ou différentiels à glissement limité.

Les dispositifs anti-patinage, aussi désigné par l'acronyme ASR « Anti Slip Régulation » en langue anglo-saxonne, sont destinés à améliorer la prestation de motricité en roulage d'un véhicule automobile sur tout type de terrain.

Ces dispositifs sont potentiellement applicables sur tout véhicule à deux roues motrices 4x2 ou quatre roues motrices 4x4 équipé d'un système de contrôle dynamique de trajectoire désigné également par l'acronyme « ESP » pour « Electronic Stability Program » en langue anglo-saxonne et permettent de faire évoluer de manière significative la prestation de motricité des véhicules.

L'ESP assure différentes fonctions comme :
- le contrôle de lacets CDC ;
- l'antiblocage des roues ou ABS « Anti lock Braking System » en langue anglo-saxonne ;
- l'anti-patinage des roues ou ASR ;
- et autres fonctions de sécurité de conduite du véhicule.

Les limites de ces dispositifs sont exposées ci-dessous :
Concernant les véhicules 4x2 :
   - le Différentiel à Glissement limité : ce système de par son mode de fonctionnement génère dans certaines conditions un blocage du différentiel ce qui égalise les vitesses de rotation des roues. Ainsi, sur des différences d'adhérences gauche / droite modérées (par exemple, herbe mouillée d'un côté, terre de l'autre) la motricité sera légèrement améliorée. Néanmoins, les performances sont limitées en particulier dans les conditions des différences d'adhérences gauche / droite plus importantes ou de basses adhérences homogènes.
   - l'ASR traditionnel: depuis son apparition sur les véhicules, l'ASR a été perfectionné ce qui a permis une amélioration continue des ses performances générales. Le système ASR, par la limitation du couple moteur (AMR) et la répartition des pressions de freinage (BASR), limite le glissement des roues. Les performances actuelles des ASR traditionnels restent néanmoins très limitées dans les situations de roulages tout terrain, ceci de par la nécessité de gérer de nombreux compromis dans la mise au point du système, en particulier la compatibilité avec des roulages entre verglas / neige et boue par exemple.
Concernant les véhicules 4x4 :
   - il existe de nombreux types de véhicules 4x4 avec des transmissions AV/AR plus ou moins évoluées. Les performances du système en terme de motricité sont significativement meilleures que les solutions introduites ci-dessus. Les inconvénients principaux de ces solutions sont : le surcoût très important, la masse supplémentaire importante pour le véhicule, leur complexité de développement et de mise au point et leur difficulté d'intégration géométrique dans les véhicules de petite et moyenne gamme.

US 5 620 393 décrit un dispositif de pilotage comprenant les caractéristiques faisant l'objet du préambule de la revendication 1.

Cependant, selon ce dispositif connu, ce n'est qu'uniquement quand le mode de conduite « sport » du véhicule est choisi qu'un paramètre d'adhérence du véhicule est pris en compte pour soit inhiber la loi de commande spécifique au mode de conduite « sport » soit pour anticiper un changement de rapport de vitesses en fonction de la situation de vie du véhicule.

La présente invention a pour but de pallier les inconvénients des dispositifs d'amélioration de la motricité des véhicules de l'art antérieur en offrant un dispositif adaptable à tout véhicule ayant besoin de différentes stratégies de pilotage.

A cet effet, l'invention propose un dispositif de pilotage comprenant les caractéristiques telles qu'énoncées dans la partie caractérisante de la revendication 1.

Dans une réalisation du dispositif selon l'invention, les modes de pilotage du système consistent en l'optimisation du point de fonctionnement du pneumatique dans le repère effort longitudinal / taux de glissement ceci, principalement en fonction de :
- l'adhérence disponible, cette estimation étant réalisée à l'aide de capteurs des paramètres d'évolution du véhicule et du mode sélectionné par le conducteur,
- la vitesse et l'accélération longitudinale du véhicule,
- en virage, la vitesse de lacet et l'accélération latérale du véhicule,

Dans une autre réalisation, les modules de pilotage comportent un premier module définissant une stratégie de pilotage pour terrain ou route normale, un deuxième module définissant une stratégie pour route boueuse, un troisième module pour route ensablée et un quatrième module pour route enneigée.

Dans une autre réalisation, la machine d'état ainsi que les modules de pilotage, sont implantés dans un calculateur du véhicule, par exemple dans l'ESP du véhicule.

Dans une autre réalisation, le dispositif de sélection est disposé sur la planche de bord sous forme d'un bouton de choix du mode de vie du véhicule accessible par le conducteur.

Le système consiste en un dispositif de pilotage des couples moteurs et de freinage aux quatre roues différentiées selon les situations de vie. Ce pilotage pourra être réalisé par un système de freinage de type ESP qui permet d'obtenir des pressions de freinage indépendantes sur les quatre roues et par le moteur qui permet de générer un couple positif aux roues.

La différentiation en fonction des situations de vie est rendue possible manuellement par la présence d'un désignateur sur la planche de bord (comportant par exemple les positions normal / tout chemin / neige / sable) qui permet d'adapter les algorithmes à la situation de vie qui est perçue par le conducteur.

L'invention sera mieux comprise par la description d'un exemple de réalisation d'un dispositif de pilotage selon l'invention à l'aide de dessins indexés dans lesquels :
- la figure 1 représente un synoptique de principe du dispositif de pilotage selon l'invention et ;
- la figure 2 représente un mode de réalisation du dispositif de la figure 1 selon l'invention.

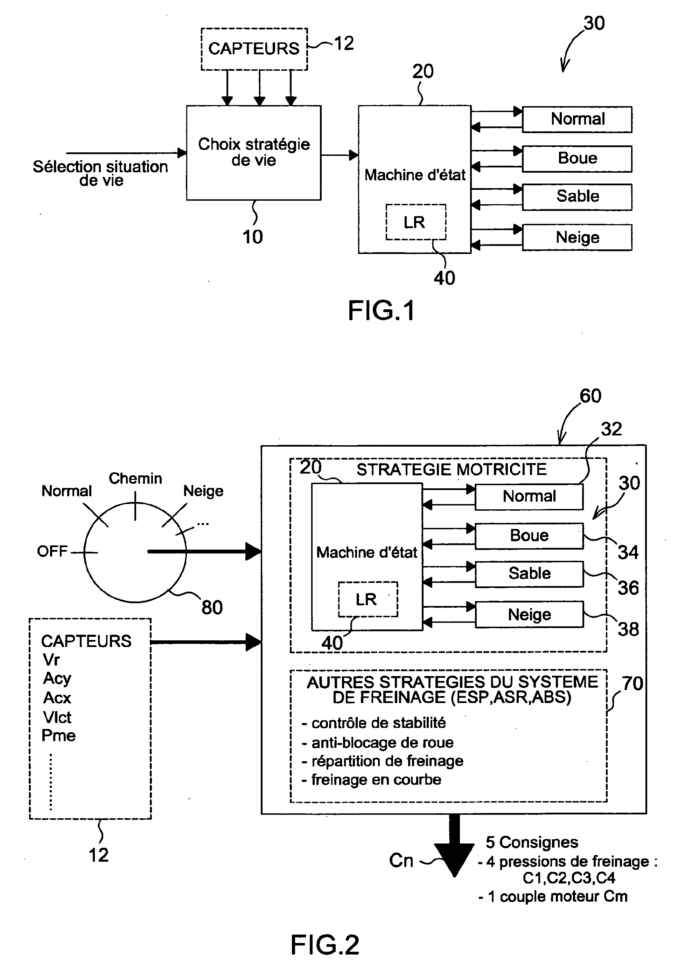

La figure 1 représente un synoptique de principe du dispositif de pilotage selon l'invention. Le dispositif comporte :
- un dispositif de sélection 10 (désignateur ou sélecteur) permettant au conducteur de sélectionner une situation de vie du véhicule, par exemple tout chemin, neige, sable, ou autre) ;
- une machine d'état 20 utilisant l'information de situation de vie (tout chemin, neige, sable ou autre) provenant du dispositif de sélection et des informations issues de capteurs 12 présents sur le véhicule, notamment vitesses de rotation Vr des roues, vitesse de lacet Vlc, accélérations latérale Acy et longitudinale Acx, pression maître cylindre Pm pour activer des algorithmes dont certains sont spécifiques
- des modules de pilotage 30 comportant chacun un algorithme correspondant à des stratégies de pilotages associées aux différents états dans la machine d'état et qui définissent des consignes de pilotage de couple moteur et de freinage des roues. Par exemple, un premier module 32 définissant une stratégie de pilotage sur chemin ou route normale, un deuxième module 34 définissant une stratégie pour sur route boueuse, un troisième module 36 pour route ensablée et un quatrième module 38 pour route enneigée.

Description de la machine d'état 20 et des stratégies de pilotage des modules 30 :

La machine d'état 20 a pour but d'activer des stratégies de contrôle. A cet effet, la machine d'état 20 intègre une logique de reconnaissance LR 40 du type de terrain qui permet ou non de confirmer la sélection par le conducteur du type de situation de vie, par exemple par une estimation de l'adhérence des roues.

Le dispositif est configuré pour activer les stratégies de pilotages spécifiques optimales (modules 30) en fonction de la situation de vie résultant de l'estimation d'adhérence réalisée par le dispositif et des indications du conducteur (mode sélectionné).

Les stratégies de pilotage du dispositif consistent en l'optimisation du point de fonctionnement du pneumatique de chaque roue du véhicule dans le repère effort longitudinal / taux de glissement.

L'optimisation du point de fonctionnement est effectuée principalement à partir des valeurs fournies par les capteurs ou calculées à partir des valeurs fournies par les capteurs du véhicule, notamment :
- l'adhérence de roue disponible : une estimation d'adhérence disponible est réalisée à l'aide des capteurs 12 du véhicule et du mode sélectionné par le conducteur,
- la vitesse et l'accélération longitudinale du véhicule : fournie par les capteurs,
- en virage : la vitesse de lacet et de l'accélération latérale du véhicule fournie par les capteurs.

Certaines fonctionnalités du dispositif de pilotage selon l'invention peuvent être décrites de la manière suivante :
- le dispositif de sélection 10 (sélecteur) comporte plusieurs positions correspondant à des états de revêtement ou des conditions de roulage (nombre supérieur ou égal à 2),
- les positions du dispositif de sélection 10 seront modifiables par le conducteur du véhicule,
- la prise en compte des demandes du conducteur sur le sélecteur pourra être inhibée par le dispositif dans certaines situations de vie,
- ces positions pourront aussi être modifiées électroniquement par le dispositif lui-même dans certaines situations de vie.

La figure 2 représente un mode de réalisation du dispositif de la figure 1 selon l'invention.

La machine d'état 20 ainsi que les modules de pilotage 30 sont, par exemple, implantés dans un calculateur 60 du véhicule, par exemple dans l'ESP du véhicule comportant notamment d'autres modules 70 définissant d'autres types de stratégies, par exemple des stratégies du système de freinage (ESP, ASR, ABS) pour :
- le contrôle de stabilité,
- l'anti-blocage des roues,
- répartition de freinage,
- freinage en courbe ou autres.

Un désignateur 80 (par exemple un bouton de choix du mode de vie du véhicule) est disposé sur la planche de bord de l'automobile. Le désignateur 80 est connecté au calculateur 60 pour fournir l'information à la machine d'état 20 du choix du conducteur sur la situation de vie du véhicule.

Les capteurs 12 connectés au calculateur 60 fournissent à la machine d'état 20 des paramètres d'évolution du véhicule tels que :
- vitesses des roues Vr,
- accélération latérale Acy,
- accélération longitudinale Acx,
- vitesse de lacet Vlct,
- pression du maître cylindre Pme.

Le calculateur 60 fournit cinq consignes Cn de commande des couples de freinage et moteurs des roues : quatre consignes C1, C2, C3 et C4 de pression de freinage et une consigne de couple moteur Cm.

Le dispositif de pilotage selon l'invention est potentiellement applicable sur tout véhicule 4x2 équipé d'un système ESP et permet de faire évoluer de manière significative la prestation de motricité des véhicules 4x2. Le système est aussi généralisable aux véhicules 4x4.

## Revendications

1. Dispositif de pilotage de véhicule, notamment d'un véhicule automobile à deux roues motrices, évoluant sur une route ou terrain, destiné à définir des consignes de couples moteurs et de freinage des roues du véhicule, comportant :
- des moyens (10, 20, 30) pour générer différents modes de pilotage fonction de paramètres d'évolution du véhicule tels que, vitesses de rotation des roues, vitesse de lacet, accélération latérale et longitudinale, pression sur la commande des freins exercée par le conducteur, et d'un mode de situation de vie du véhicule choisi par le conducteur parmi différentes situations de vie préétablies correspondants à différents types de routes et de terrains et des conditions de roulage du véhicule,
- des moyens d'estimation (40) de la situation de vie du véhicule, le dispositif étant configuré pour déterminer un mode de pilotage optimal (32, 34, 36, 38) parmi les différents modes de pilotage pouvant être générés par le dispositif en fonction de la situation de vie estimée du véhicule et du mode de situation de vie choisi par le conducteur, les moyens d'estimation de la situation de vie du véhicule comportent une logique de reconnaissance LR (40) du type de routes ou de terrains confirmant ou non le mode de situation de vie choisi par le conducteur :
- un dispositif de sélection (80) permettant au conducteur de sélectionner une situation de vie du véhicule,
**caractérisé en ce que** les moyens pour générer différents modes de pilotage comportent:
- une machine d'état (20) utilisant l'information de situation de vie provenant du dispositif de sélection et des informations issues de capteurs (12) présents sur le véhicule, notamment des capteurs de vitesse de rotation (Vr) des roues, vitesse de lacet (Vlc), accélérations latérale et longitudinale (Acx), pression maître cylindre (Pm) pour activer des algorithmes dont certains sont spécifiques,
- des modules de pilotage (30) comportant chacun (32, 34, 36, 38) un algorithme correspondant à des stratégies de pilotages associées à différents états dans la machine d'état et qui définissent des consignes de pilotage de couple moteur et de freinage des roues.

2. Dispositif de pilotage selon la revendication 1, **caractérisé en ce que** les modes de pilotage du système consistent en l'optimisation du point de fonctionnement du pneumatique dans le repère effort longitudinal / taux de glissement ceci, principalement en fonction de :
- l'adhérence disponible, cette estimation étant réalisée à l'aide des capteurs des paramètres d'évolution du véhicule et du mode sélectionné par le conducteur,
- la vitesse et l'accélération longitudinale du véhicule,
- en virage, la vitesse de lacet et l'accélération latérale du véhicule.

3. Dispositif de pilotage selon la revendication 1 ou 2, **caractérisé en ce que** les modules de pilotage (30) comportent un premier module (32) définissant une stratégie de pilotage pour terrain ou route normale, un deuxième module (34) définissant une stratégie pour route boueuse, un troisième module (36) pour route ensablée et un quatrième module (38) pour route enneigée.

4. Dispositif de pilotage selon l'une des revendications 2 ou 3, **caractérisé en ce que** la machine d'état (20) ainsi que les modules (30) de pilotage sont implantés dans un calculateur (60) du véhicule, par exemple dans l'ESP du véhicule.

5. Dispositif de pilotage selon la revendication 4, **caractérisé en ce que** la machine d'état (20) ainsi que les modules (30) de pilotage sont implantés dans l'ESP.

6. Dispositif de pilotage selon l'une des revendications précédentes, **caractérisé en ce que** le dispositif de sélection (80) est disposé sur la planche de bord du véhicule, sous forme d'un bouton de choix du mode de vie du véhicule, accessible par le conducteur.

## Claims

1. Vehicle control device, in particular for a motor vehicle which has two drive wheels and moves on a road or terrain, for defining engine torque and wheel braking settings for the vehicle, comprising:
- means (10, 20, 30) for generating different control modes as a function of the movement parameters of the vehicle, such as rotational speeds of the wheels, yaw rate, lateral and longitudinal acceleration, pressure exerted on the brake control by the driver, and a vehicle life situation mode selected by the driver from various pre-established life situations corresponding to different types of roads and terrains and vehicle travelling conditions,
- means for estimating (40) the vehicle life situation, the device being configured to determine an optimum control mode (32, 34, 36, 38) from the various control modes which can be produced by the device as a function of the estimated vehicle life situation and the life situation mode chosen by the driver, the means for estimating the vehicle life situation comprising a recognition logic LR (40) for recognising the type of roads or terrains and confirming or not confirming the life situation mode selected by the driver,
- a selection device (80) allowing the driver to select a vehicle life situation,
**characterised in that** the means for generating different control modes comprise:
- a conditions machine (20) which uses the life situation information provided by the selection device and information derived from sensors (12) located on the vehicle, in particular sensors for rotational speed (Vr) of the wheels, yaw rate (Vlc), lateral and longitudinal accelerations (Acx), master cylinder pressure (Pm), in order to activate algorithms, some of which are specific,
- control modules (30) which each (32, 34, 36, 38) comprise an algorithm corresponding to control strategies associated with different conditions in the conditions machine and which define control settings for engine torque and wheel braking.

2. Control device according to claim 1, **characterised in that** the control modes of the system consist of optimising the working point of the tyre in the longitudinal stress / slip rate reference, primarily as a function of:
- the available grip, this estimate being made using sensors for the movement parameters of the vehicle and the mode selected by the driver,
- the speed and longitudinal acceleration of the vehicle,
- on bends, the yaw rate and lateral acceleration of the vehicle.

3. Control device according to claim 1 or claim 2, **characterised in that** the control modules (30) comprise a first module (32) defining a control strategy for normal terrain or road, a second module (34) defining a strategy for muddy roads, a third module (36) for sandy roads and a fourth module (38) for snowy roads.

4. Control device according to either claim 2 or claim 3, **characterised in that** the conditions machine (20) and the control modules (30) are installed in a computer (60) of the vehicle, for example in the ESP of the vehicle.

5. Control device according to claim 4, **characterised in that** the conditions machine (20) and the control modules (30) are installed in the ESP.

6. Control device according to any one of the preceding claims, **characterised in that** the selection device (80) is arranged on the dashboard of the vehicle, in the form of a selection button for the vehicle life mode, accessible to the driver.

## Patentansprüche

1. Vorrichtung zum Steuern eines Fahrzeuges, im Speziellen eines Kraftfahrzeuges mit zwei Antriebsrädern, das sich auf einer Straße oder im Gelände bewegt, die dazu bestimmt ist, die Vorgaben für Motordrehmomente und für das Abbremsen der Fahrzeugräder festzulegen, umfassend:
- Vorrichtungen (10, 20, 30) zum Erzeugen verschiedener Steuerungsmodi in Abhängigkeit von den Bewegungsparametern des Fahrzeuges, wie Umdrehungsgeschwindigkeiten der Räder, Giergeschwindigkeit, Seiten- und Längsbeschleunigung, vom Lenker auf die Bremssteuerung ausgeübter Druck, und in Abhängigkeit von einem Betriebslagemodus des Fahrzeuges, der vom Lenker unter verschiedenen, vorab festgelegten Betriebslagen ausgewählt wird, die unterschiedlichen Straßen- und Geländetypen und Verkehrsbedingungen des Fahrzeugs entsprechen,
- Vorrichtungen (40) zum Einschätzen der Betriebslage des Fahrzeuges, wobei die Vorrichtung konfiguriert ist, um unter den verschiedenen Steuerungsmodi, die von der Vorrichtung in Abhängigkeit von der eingeschätzten Betriebslage des Fahrzeuges und des vom Lenker gewählten Betriebslagemodus einen optimalen Steuerungsmodus (32, 34, 36, 38) festzulegen, wobei die Vorrichtungen zum Einschätzen der Betriebslage des Fahrzeuges eine Erkennungslogik LR (40) des Straßen- und Geländetyps umfassen, die den vom Lenker gewählten Betriebslagemodus bestätigt oder nicht,
- eine Auswahlvorrichtung (80), anhand derer der Lenker eine Betriebslage des Fahrzeuges auswählen kann, **dadurch gekennzeichnet, dass** die Vorrichtungen zum Erzeugen verschiedener Steuerungsmodi folgendes umfassen:
- eine Statusmaschine (20), die die Information über die Betriebslage aus der Auswahlvorrichtung und von den Informationen aus den im Fahrzeug vorhandenen Sensoren (12), vor allem von den Sensoren für die Umdrehungsgeschwindigkeiten der Räder (Vr), die Giergeschwindigkeit (Vlc), die Seiten- und Längsbeschleunigung (Acx), den Zylindermeisterdruck (Pm) verwendet, um Algorithmen zu aktivieren, von denen einige spezifisch sind,
- Steuerungsmodule (30), von denen jedes (32, 34, 36, 38) einen Algorithmus umfasst, der Steuerungsstrategien entspricht, die den verschiedenen Zuständen der Statusmaschine zugeordnet werden und die Vorgaben zur Steuerung des Motordrehmoments und der Abbremsung der Räder festlegen.

2. Steuerungsvorrichtung nach Anspruch 1, **dadurch gekennzeichnet, dass** die Steuerungsmodi des Systems aus der Optimierung des Arbeitspunktes des Reifens im Verhältnis Längskraft / Schlupfrate bestehen, und dies in erster Linie in Abhängigkeit von:
- der verfügbaren Haftung, wobei diese Schätzung mithilfe der Sensoren für die Bewegungsparameter des Fahrzeuges und des vom Lenker ausgewählten Modus erfolgt,
- der Längsgeschwindigkeit und -beschleunigung des Fahrzeugs,
- der Giergeschwindigkeit und der Seitenbeschleunigung des Fahrzeugs in der Kurve.

3. Steuerungsvorrichtung nach Anspruch 1 oder 2, **dadurch gekennzeichnet, dass** die Steuerungsmodule (30) ein erstes Modul (32) umfassen, das eine Steuerungsstrategie für normales Gelände oder normale Straße festlegt, ein zweites Modul (34), das eine Strategie für eine schlammige Straße festlegt, ein drittes Modul (36) für eine versandete Straße und ein viertes Modul (38) für eine schneebedeckte Straße.

4. Steuerungsvorrichtung nach Anspruch 2 oder 3, **dadurch gekennzeichnet, dass** die Statusmaschine (20), sowie die Steuerungsmodule (30) in einem Rechner (60) des Fahrzeugs, beispielsweise im ESP des Fahrzeugs, angeordnet sind.

5. Steuerungsvorrichtung nach Anspruch 4, **dadurch gekennzeichnet, dass** Statusmaschine (20), sowie die Steuerungsmodule (30) im ESP angeordnet sind.

6. Steuerungsvorrichtung nach einem der vorherigen Ansprüche, **dadurch gekennzeichnet, dass** die Auswahlvorrichtung (80) auf dem Armaturenbrett des Fahrzeuges in Form eines Auswahlknopfes für den Betriebsmodus des Fahrzeuges angeordnet ist, auf den der Lenker zugreifen kann.
